# EUROPÄISCHE PATENTSCHRIFT

(11) **EP 2 655 126 B1**
(45) Veröffentlichungstag und Bekanntmachung des Hinweises auf die Patenterteilung: **30.04.2014**
(21) Anmeldenummer: 11807863.3
(22) Anmeldetag: 17.12.2011
(51) Int. Cl.: B60N 2/36, B60N 2/015, B60N 2/22

(54) **SCHLOSS FÜR EINEN FAHRZEUGSITZ UND FAHRZEUGSITZ**
LOCK FOR A VEHICLE SEAT, AND VEHICLE SEAT
VERROU POUR SIÈGE DE VÉHICULE ET SIÈGE DE VÉHICULE

(30) Priorität: 20.12.2010 DE 102010055246
(43) Veröffentlichungstag der Anmeldung: 30.10.2013
(73) Patentinhaber: Keiper GmbH & Co. KG, 67657 Kaiserslautern (DE)
(72) Erfinder: MÜLLER, Peter, 67686 Mackenbach (DE); YASAROGLU, Kadir, 16950 Güzelyali Mudanya BURSA (TR); WINDECKER, Volker, 67729 Sippersfeld (DE); LABUK, Silke, 67685 Weilerbach (DE); HABER, Stefan, 66955 Pirmasens (DE)
(74) Vertreter: Wilhelm, Wolfgang
(86) Internationale Anmeldenummer: PCT/EP2011/006398
(87) Internationale Veröffentlichungsnummer: WO 2012/084172

(56) Entgegenhaltungen:
- EP-A2- 2 020 335
- DE-A1-102004 051 894
- DE-A1-102005 029 079
- DE-A1-102008 062 091
- DE-A1-102009 003 671
- DE-B4-102007 016 409

## Beschreibung

Die Erfindung betrifft ein Schloss für einen Fahrzeugsitz gemäß dem Oberbegriff des Anspruchs 1. Die Erfindung betrifft weiterhin einen Fahrzeugsitz, insbesondere einen Kraftfahrzeugsitz, gemäß dem Anspruch 13.

### Stand der Technik

Ein gattungsgemäßer Fahrzeugsitz und ein gattungsgemäßes Schloss sind aus der DE 10 2008 062 091 A1 bekannt. Der gattungsgemäße Fahrzeugsitz umfasst dabei eine Lehne, welche aus einer Gebrauchsstellung in eine Nichtgebrauchsstellung relativ zu einer Fahrzeugstruktur schwenkbar und mittels einer Verriegelungsvorrichtung in der Gebrauchsstellung verriegelbar ist.

Die Verriegelungsvorrichtung weist ein mit der Lehne verbundenes Schloss mit einer um eine Klinkenachse zwischen einer Freigabeposition und einer Verriegelungsposition schwenkbaren Klinke auf. In der Verriegelungsposition ist die Klinke dabei mit einem Schließbolzen oder einem Schließbügel der Fahrzeugstruktur in Verriegelungseingriff, in der Freigabeposition ist die Klinke nicht mit dem Schließbolzen oder dem Schließbügel in Verriegelungseingriff. Bei in Gebrauchsstellung befindlicher Lehne ist die Klinke in ihrer Verriegelungsposition.

Ferner ist ein Auswerfer vorgesehen, durch den die entriegelte Lehne um ein bestimmtes Maß aus der Gebrauchsstellung in eine Auswurfstellung schwenkbar ist. Aus der Auswurfstellung kann die Lehne von Hand weiter in ihre Nichtgebrauchssteliung geschwenkt werden.

Der Auswerfer umfasst dazu ein an der Lehne in einem Gehäuse des Schlosses angeordnetes Federelement. Das Federelement ist dabei als eine zusätzliche Auswerferfeder ausgebildet, welche zwischen dem Gehäuse des Schlosses und der Klinke angeordnet ist, und welche ein öffnendes Moment auf die Klinke ausübt. Die als Zugfeder ausgebildete Auswerferfeder beaufschlagt also die Klinke ständig in Richtung zu der Freigabeposition hin.

In der Gebrauchsstellung und auch in der Auswurfstellung ist die Lehne um einen bestimmten Winkel gegen die Vertikale geneigt, so dass sie auf sich mit ihrem Eigengewicht ein Drehmoment in Richtung auf die Gebrauchsstellung zu ausübt.

Dies kann beispielsweise bei vorn nach oben geneigtem, an ansteigender Straße stehendem Fahrzeug dazu führen, dass nach einem Entriegeln der Verriegelungsvorrichtung und Schwenken der Lehne in die Auswurfstellung die Lehne durch ihr Eigengewicht wieder in die Gebrauchsstellung zurückschwingt und wieder verriegelt wird.

Weitere Schlößer für Fahrzeugsitze sind aus der EP 2 020 335 A2, der DE 10 2004 051894 A1, der DE 10 2005 029079 A1 und der DE 10 2009 003671 A1 bekannt.

### Aufgabe

Aufgabe der Erfindung ist es, ein Schloss für einen Fahrzeugsitz und einen Fahrzeugsitz der eingangs genannten Art zu schaffen, wobei nach einem Entriegeln der Verriegelungsvorrichtung ein selbsttätiges Verriegeln vermieden wird, und wobei eine ständige Beaufschlagung der Klinke durch das Federelement vermieden ist.

### Lösung

Diese Aufgabe wird erfindungsgemäß durch ein Schloss für einen Fahrzeugsitz mit den im Anspruch 1 genannten Merkmalen gelöst. Vorteilhafte Ausgestaltungen, welche einzeln oder in Kombination miteinander eingesetzt werden können, sind Gegenstand der Unteransprüche 2 bis 12.

Erfindungsgemäß ist vorgesehen, dass der Auswerfer derart ausgestaltet ist, dass er bei in Freigabeposition befindlicher Klinke mit einem unter Vorspannung stehenden Federelement an den Schließbolzen oder Schließbügel in Anlage bringbar ist.

Durch diese Ausbildung hält der Auswerfer den Schließbolzen oder Schließbügel von der Klinke entfernt, so dass die Klinke nicht mehr selbsttätig in einen Verriegelungseingriff mit dem Schließbolzen oder Schließbügel gelangen kann. Ebenso erfolgt keine ständige Beaufschlagung der Klinke durch das Federelement.

Weiterhin erfindungsgemäße weist der Auswerfer einen von dem Federelement beaufschlagten Auswurfschieber auf. Dadurch ist ein direkter Kontakt zwischen dem Federelement und der Fahrzeugstruktur oder dem Schließbolzen oder dem Schließbügel vermieden.

Das Gehäuse des Schlosses kann eine schlitzartige Aufnahme aufweisen, deren eines Ende nach außen offen und deren anderes Ende mit einem Boden geschlossen ist, wodurch ein verhältnismäßig einfaches Einführen eines Schließbolzens möglich ist.

Zur Verriegelung an der Fahrzeugstruktur ist der Schließbolzen quer zu seiner Längserstreckung in die Aufnahme einführbar und von der Klinke an seiner dem Boden der Aufnahme abgewandten Seite umgreifbar. Somit ist der Schließbolzen in der Aufnahme des Gehäuses des Schlosses gesichert.

Gemäß einer vorteilhaften Ausgestaltung der Erfindung ist das Federelement als Druckfeder ausgebildet und stützt sich an dem Gehäuse des Schlosses ab. Dabei ist das Federelement insbesondere zwischen dem Gehäuse und dem Auswurfschieber eingespannt. Dadurch wird der erforderliche Bauraum verkleinert.

Vorzugsweise ist das Federelement als zylinderförmige Schraubenfeder ausgestaltet, wodurch ebenfalls nur ein geringer Bauraum benötigt wird.

Besitzt der Auswurfschieber eine zylindrische Vertiefung, in welche das Federelement eingepasst ist, so ist das Federelement mit dem Auswurfschieber formschlüssig verbunden und ein Verkippen oder Verkanten des Auswurfschiebers ist vermieden.

Ein Verkippen oder Verkanten des Auswurfschiebers wird zusätzlich vermieden, indem der Auswurfschieber einen Anschlag an zwei Seiten umgreift.

Vorteilhaft ist der Anschlag einstückig mit dem Gehäuse des Schlosses ausgebildet und bildet dabei den Boden der schlitzartigen Aufnahme. Dadurch ist die Anzahl der benötigten Bauteile reduziert, wodurch auch der Montageaufwand sinkt.

Gemäß einer vorteilhaften Weiterbildung umfasst der Auswurfschieber zwei Arme, mit welchen er den Anschlag umgreift. Dabei ist ein Arm länger ausgebildet als der andere Arm, und an einem dem Federelement abgewandten Ende des längeren Arms ist eine Kontaktfläche vorgesehen, mit welcher der Auswurfschieber den Schließbolzen oder Schließbügel kontaktiert. Somit ist der Auswurfschieber formschlüssig in dem Gehäuse geführt und gegen Verkippen oder Verkanten gesichert.

Zum Kontaktieren des Schließbolzens oder Schließbügels ragt der längere Arm des Auswurfschiebers mit der Kontaktfläche über den Boden hinaus in den Bereich der Aufnahme hinein.

Dabei kann die Klinke des Schlosses mittels einer Entriegelungseinrichtung in eine Freigabeposition bewegbar sein. Ist dabei die Entriegelungseinrichtung fern ansteuerbar, wobei die die Fernsteuerung auslösende Person sich nicht im Bereich des Fahrzeugsitzes sondern entfernt, wie beispielsweise im Bereich des Kofferraums, befindet, so ist ein sicheres Vermeiden eines selbsttätigen Verriegelns nach einem Entriegeln besonders wichtig.

Diese Aufgabe wird erfindungsgemäß auch durch einen Fahrzeugsitz mit den im Anspruch 13 genannten Merkmalen gelöst. Vorteilhafte Ausgestaltungen sind Gegenstand der Unteransprüche 14 und 15.

Dabei kann das Schloss beispielsweise als Lehnenschloss ausgebildet sein und an einer Lehne des Fahrzeugsitzes angeordnet sein, welche relativ zu einer Fahrzeugstruktur schwenkbar und in der Gebrauchsstellung an dieser verriegelbar ist. Der Schließbolzen oder Schließbügel ist in diesem Fall an der Fahrzeugstruktur angebracht.

Das Schloss kann aber auch als Bodenschloss ausgebildet sein und an einem Sitzteil des Fahrzeugsitzes angeordnet sein. Dabei ist der Fahrzeugsitz mittels des Schlosses an der Fahrzeugstruktur befestigbar und, beispielsweise zur Entnahme des Sitzes aus dem Fahrzeug oder zum Schwenken des Sitzteils relativ zu der Fahrzeugstruktur, von der Fahrzeugstruktur lösbar. Ein solcher Anwendungsfall ist beispielsweise in der EP 1 488 950 A2 offenbart. Auch in diesem Fall ist der Schließbolzen oder Schließbügel an der Fahrzeugstruktur angebracht.

Es ist jedoch auch denkbar, dass das Schloss an der Fahrzeugstruktur angeordnet ist, und dass der Schließbolzen oder Schließbügel an der Lehne oder an dem Sitzteil oder an einem anderen Teil des Fahrzeugsitzes angebracht ist.

Bei einem Lehnenschloss ist dabei insbesondere vorgesehen, dass der Auswerfer in der Gebrauchsstellung der Lehne mit dem unter Vorspannung stehenden Federelement an der Fahrzeugstruktur oder an dem Schließbolzen oder Schließbügel in Anlage ist.

Durch diese Ausbildung kann die Klinke nach einem Schwenken der Lehne in die Auswurfstellung nicht mehr selbsttätig in einen Verriegelungseingriff mit dem Schließbolzen oder Schließbügel gelangen. Die Lehne ist dann bereit, manuell weiter in die Nichtgebrauchsstellung verschwenkt zu werden. Auch erfolgt keine ständige Beaufschlagung der Klinke durch das Federelement.

Zum Halten der Lehne wirkt einer Schwenkbewegung der Lehne aus der Auswurfstellung in die Gebrauchsstellung vorteilhaft eine von dem Federelement aufgebrachte Kraft entgegen, die einer auf die Lehne in Richtung in die Gebrauchsstellung wirkenden Kraft aufgrund des Eigengewichts der Lehne bei in Gebrauchsstellung befindlicher Lehne entspricht oder die größer ist.

Die von dem Federelement aufgebrachte Kraft zum Halten der Lehne in der Auswurfstellung ist vorteilhaft so groß, dass sie auch bei starker Neigung des Fahrzeugs größer ist, als die entgegenwirkende Kraft aufgrund des Eigengewichts der Lehne.

Vorteilhaft wird die Klinke mittels einer zusätzlichen Klinkenfeder zu ihrer Freigabeposition hin beaufschlagt. Auf diese Weise wird bei einem Entriegeln des verriegelten Fahrzeugsitzes die Lehne von dem Auswerfer und zusätzlich durch das auf die Klinke wirkende Drehmoment in die Auswurfstellung sowie gegebenenfalls darüber hinaus bewegt. Damit wird die Sicherheit gegen ein selbsttätiges Verriegeln noch erhöht.

Die Klinke weist dabei eine Funktionsfläche auf, mittels welcher beim Einführen des Schließbolzens oder Schließbügels in die schlitzartige Aufnahme des Schlosses die Klinke aus ihrer Freigabeposition in ihre Verriegelungsposition geschwenkt wird. Dabei wirkt auf die Klinke ein Drehmoment in Richtung auf die Verriegelungsposition hin.

Diesem von dem Schließbolzen oder Schließbügel aufgebrachten Drehmoment setzt die Klinkenfeder ein Drehmoment in Richtung auf die Freigabeposition hin entgegen. Dieses von der Klinkenfeder auf die Klinke aufgebrachte Drehmoment erzeugt eine Kraft, welche die Lehne aus der Gebrauchsstellung in die Auswurfstellung beaufschlagt.

Eine vorteilhafte Aufteilung der beiden Kräfte, das heißt, der von dem Auswerfer auf die Lehne aufgebrachten Kraft sowie der durch die Klinkenfeder verursachten Kraft auf die Lehne erlaubt eine Minimierung dieser beiden Kräfte.

Die Klinkenfeder ist dabei vorteilhaft als Drehschenkelfeder ausgeführt, wodurch der vorhandene Bauraum in dem Gehäuse des Schlosses optimal genutzt ist.

### Figuren und Ausführungsformen der Erfindung

Im Folgenden ist die Erfindung anhand von in den Zeichnungen dargestellten vorteilhaften Ausführungsbeispielen näher erläutert. Die Erfindung ist jedoch nicht auf diese Ausführungsbeispiele beschränkt. Es zeigen:
- Figur 1: eine schematische Darstellung eines Fahrzeugsitzes,
- Figur 2: eine Schnittansicht des Schlosses im verriegelten Zustand,
- Figur 3: eine Schnittansicht des Schlosses nach Figur 2 im entriegelten Zustand,
- Figur 4: eine Teilansicht des Schlosses nach Figur 2 im verriegelten Zustand,
- Figur 5: eine Seitenansicht des Schlosses nach Figur 2 im verriegelten Zustand,
- Figur 6: einen Schnitt durch das Schloss nach Figur 2 im verriegelten Zustand entlang der Linie VI - VI und

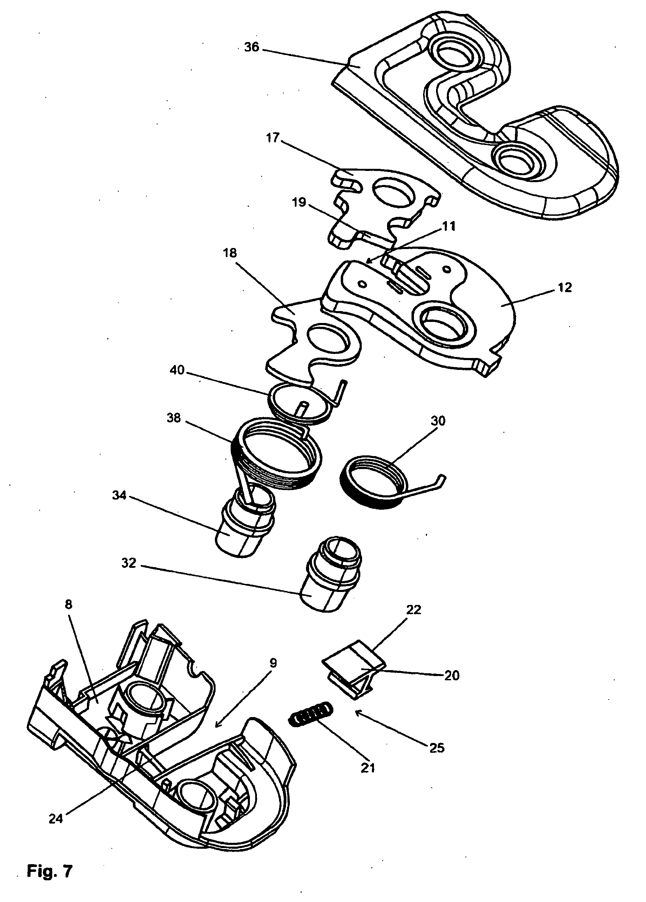

- Figur 7: eine Explosionsdarstellung des Schlosses nach Figur 2.

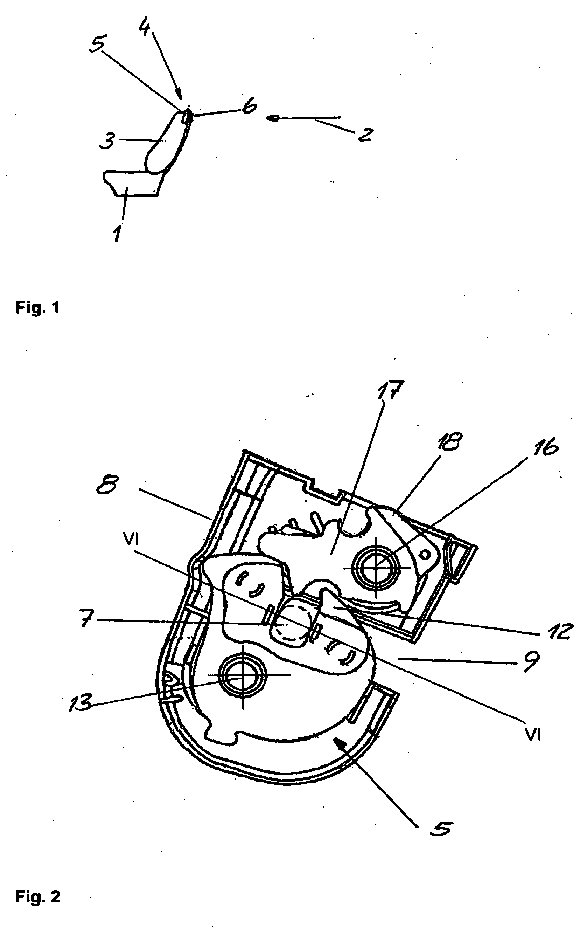

Der in Figur 1 dargestellte Fahrzeugsitz weist ein Sitzteil 1 auf, an dessen in Fahrtrichtung 2 hinteren Ende eine Lehne 3 angelenkt ist, die aus ihrer dargestellten aufrechten Gebrauchsstellung in eine zur Frontseite des Fahrzeugs gerichtete Nichtgebrauchsstellung umklappbar ist.

In der Gebrauchsstellung ist die Lehne 3 von einer Verriegelungsvorrichtung 4 verriegelbar, die ein an dem oberen Ende der Lehne 3 angeordnetes Schloss 5 und einen an einer Fahrzeugstruktur 6 ortsfest angeordneten Schließbolzen 7 umfasst, der sich waagerecht und quer zur Fahrtrichtung 2 erstreckt.

Ein gattungsgemäßes Schloss 5 wird auch als Lehnenschloss bezeichnet und ist beispielsweise aus der DE 10 2007 016 409 B4 bekannt. Das aus der DE 10 2007 016 409 B4 bekannte Lehnenschloss weist jedoch, im Gegensatz zum Anmeldegegenstand, keinen Auswerfer auf.

Das Schloss 5 weist ein Gehäuse 8 auf, welches mit einem Deckel 36 verschlossen ist. Das Gehäuse 8 weist eine bei aufgerichteter Lehne etwa waagerecht ausgerichtete schlitzartige Aufnahme 9 auf, deren entgegen der Fahrtrichtung 2 gerichtetes Ende nach außen offen ist und dessen entgegengesetztes, in Fahrtrichtung 2 gerichtetes, Ende mit einem Boden 10 verschlossen ist.

Ein erster Lagerbolzen 32 lagert eine um eine Klinkenachse 13 schwenkbare Klinke 12. Zum Zusammenwirken mit dem Schließbolzen 7 weist die Klinke 12 ein Hakenmaul 14 auf. In einer Freigabeposition ist die Klinke 12 so geschwenkt, dass ihr Hakenmaul 14 und die Aufnahme 9 des Gehäuses 8 für den Schließbolzen 7 aufnahmebereit sind.

Ein zum ersten Lagerbolzen 32 parallel angeordneter zweiter Lagerbolzen 34 lagert ein Fangelement 17 und ein Spannelement 18, welche in der Ebene der Klinke 12 um eine Fangelementachse 16 schwenkbar sind.

Die Klinkenachse 13 und die Fangelementachse 16 verlaufen parallel zueinander.

Die Klinke 12 ist von einer Federkraft einer Klinkenfeder 30 beaufschlagt, wodurch ein auf die Klinke 12 in Entriegelungsrichtung wirkendes Drehmoment erzeugt wird. Die Klinke 12 ist also in ihre Entriegelungsrichtung vorgespannt. Die Klinkenfeder 30 ist vorliegend als Drehschenkelfeder ausgeführt und um die Klinkenachse 13 herum angeordnet.

Das Fangelement 17 und das Spannelement 18 sind durch eine erste Drehfeder 38 und eine zweite Drehfeder 40 jeweils in ihre Schließrichtung vorgespannt. Die erste Drehfeder 38 und eine zweite Drehfeder 40 sind vorliegend als Drehschenkelfedern ausgeführt und um die Fangelementachse 16 herum angeordnet.

Das Fangelement 17 und das Spannelement 18 sind mit einem Leerweg auf Mitnahme gekoppelt.

In der Verriegelungsposition der Klinke 12 beaufschlagt das vorgespannte Spannelement 18 mittels einer exzentrisch zum zweiten Lagerbolzen 34 gekrümmten Spannfläche die Klinke 12, um ein schließendes Moment auf die Klinke 12 auszuüben. Mit der Spannfläche wirkt eine Funktionsfläche 11 der Klinke 12 zusammen, wobei der Winkel zwischen der Spannfläche und der Funktionsfläche 11 außerhalb des Selbsthemmungsbereichs liegt.

Durch ein Schwenken der Lehne 3 in ihre Gebrauchsstellung wird der Schließbolzen 7 relativ zur Lehne 3 in die Aufnahme 9 hineinbewegt. Dabei gelangt der Schließbolzen 7 in das Hakenmaul 14 der Klinke 12 und an der Funktionsfläche 11 der Klinke 12 in Anlage.

Dabei wird die Klinke 12 aus der Freigabeposition in eine Verriegelungsposition geschwenkt, in der sich das Hakenmaul 14 quer zur Aufnahme 9 erstreckt, wodurch ein Herausbewegen des Schließbolzens 7 aus der Aufnahme 9 verhindert ist.

Gelangt aus dem entriegelten Zustand der Schließbolzen 7 in die Aufnahme 9 und in Anlage an die Funktionsfläche 11, so drückt also der Schließbolzen 7 die Klinke 12 in deren Verriegelungsposition.

Das Spannelement 18 bewegt sich dabei entlang der Funktionsfläche 11 ebenso wie das vom Spannelement 18 mitgenommene Fangelement 17, wodurch diese beiden Elemente 17 und 18 die Klinke 12 in ihrer Verriegelungsposition sichern.

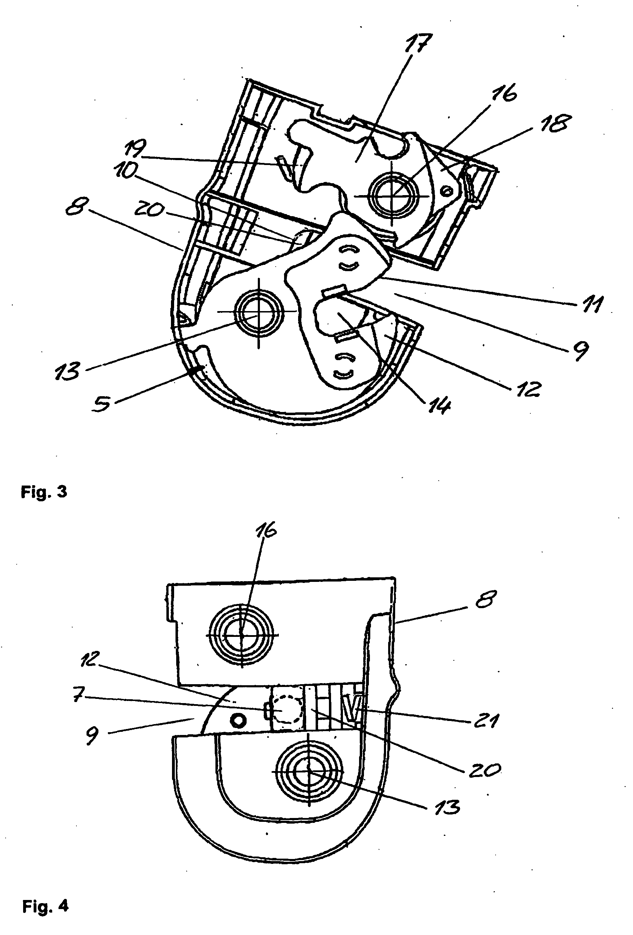

Zum Entriegeln wird von einem nicht dargestellten ferngesteuerten Antrieb das Fangelement 17, gemäß der Darstellung in Fig. 2 und Fig. 3 im Uhrzeigersinn, geschwenkt, so dass sich eine Fangfläche 19 des Fangelements 17 von der Funktionsfläche 11 entfernt.

Das Fangelement 17 nimmt dabei das Spannelement 18 mit, so dass die Klinke 12 nicht mehr gesichert ist.

In dem Gehäuse 8 ist ein Auswerfer 25 vorgesehen, welcher ein Federelement 21 und einen Auswurfschieber 20 umfasst. Der Auswurfschieber 20 ist dabei in Längserstreckungsrichtung der Aufnahme 9 verschiebbar geführt. Das Federelement 21 ist vorliegend als Druckfeder ausgeführt, die im Gehäuse 8 abgestützt ist, und die den Auswurfschieber 20 in Richtung zum offenen Ende der Aufnahme 9 hin drückt.

In der Freigabeposition der Klinke 12 und bei nicht in die Aufnahme 9 eingeführtem Schließbolzen 7 ragt der Auswurfschieber 20 über den Boden 10 hinaus in die Aufnahme 9 hinein.

Wird die Lehne in ihre Gebrauchsstellung geschwenkt, wobei sich der Schließbolzen 7 in die Aufnahme 9 hineinbewegt, so kommt der Schließbolzen 7 an dem Auswurfschieber 20 zur Anlage und verschiebt diesen entgegen der Kraft des Federelements 21 in Richtung zum Boden 10 hin. Ferner drückt der Schließbolzen 7 die Klinke 12 in deren Verriegelungsposition.

Erfolgt aus dieser Verriegelungsstellung ein Entriegeln, so wird der Schließbolzen 7 durch die Kraft des Federelements 21 von dem Auswurfschieber 20 zur Öffnung der Aufnahme 9 hin verschoben bis die Lehne 3 eine Auswurfstellung erreicht hat und ist aufgrund der Vorspannung des Federelements 21 dort sicher gehalten.

In dieser Auswurfstellung der Lehne 3 kann die Klinke 12 den Schließbolzen 7 nicht mehr verriegelnd hintergreifen.

Die Vorspannkraft des Federelements 21 ist so groß, dass auch bei geneigtem Fahrzeug das Eigengewicht der Lehne 3 die Lehne 3 entgegen der Kraft des Federelements 21 nicht wieder in die Gebrauchsstellung bewegen kann, sondern die Lehne 3 zunächst in der Auswurfstellung gehalten wird.

Damit ist ein selbsttätiges Zurückbewegen der Lehne 3 in ihrer Gebrauchsstellung und ein Verriegeln der Lehne 3 in Schloss 5 sicher vermieden.

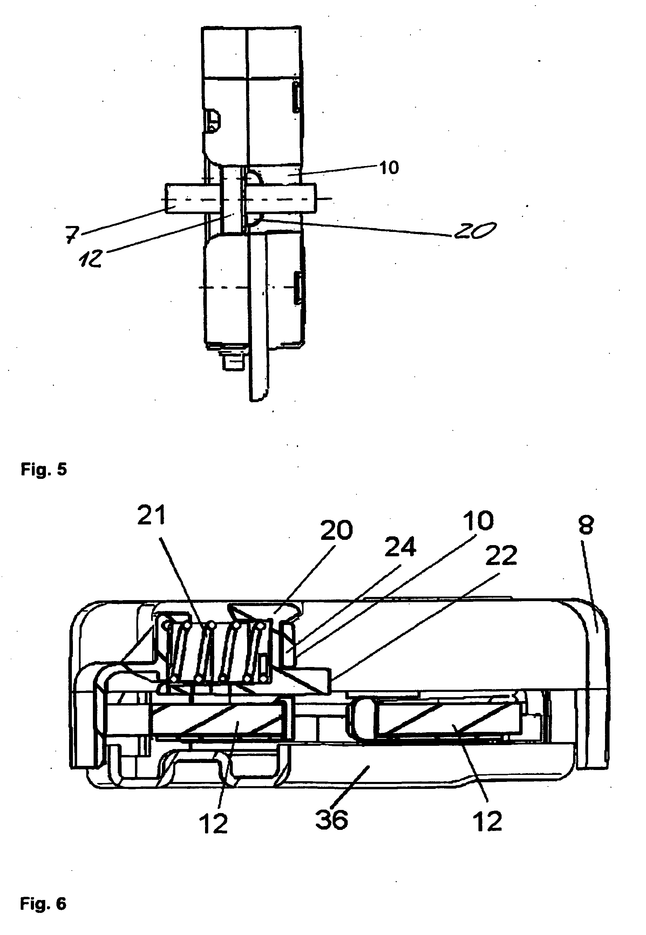

In Figur 6 ist ein Schnitt durch das Schloss 5 im verriegelten Zustand entlang der Linie VI - VI in Figur 2 gezeigt. Der Schließbolzen ist dabei nicht dargestellt. Das bedeutet, in der in Figur 6 gezeigten Darstellung ist das Schloss 5 verriegelt, es befindet sich jedoch kein Schließbolzen in der Aufnahme 9.

Das Federelement 21 ist zwischen dem Gehäuse 8 des Schlosses 5 und dem Auswurfschieber 20 eingespannt und drückt den Auswurfschieber 20 in der hier gezeigten Darstellung gegen einen Anschlag 24, welche der Auswurfschieber 20 an zwei Seiten umgreift. Der Anschlag 24 ist einstückig mit dem Gehäuse 8 stegförmig ausgebildet und bildet auf der dem Federelement 21 abgewandten Seite den Boden 10.

Der Auswurfschieber 20 umfasst zwei Arme, mit denen er den Anschlag 24 umgreift, wobei ein Arm, vorliegend der der Klinke 12 zugewandte Arm, länger ausgebildet ist als der andere, der Klinke abgewandte Arm. An dem dem Federelement 21 abgewandten Ende des längeren Arms ist eine Kontaktfläche 22 vorgesehen.

In der gezeigten Darstellung ragt der längere Arm mit der Kontaktfläche 22 über den Boden 10 hinaus in die Aufnahme 9 hinein.

Das Federelement 21 ist vorliegend als zylinderförmige Schraubenfeder ausgestaltet. Der Auswurfschieber 20 besitzt auf seiner dem Anschlag 24 abgewandten Seite eine zylindrische Vertiefung, in welche das Federelement 21 eingepasst ist.

In der Auswurfstellung ist der Schließbolzen 7 in die Aufnahme 9 des Schlosses 5 eingeführt und berührt die Kontaktfläche 22 des Auswurfschiebers 20. Das Federelement 21 drückt dabei den Auswurfschieber 20 gegen den Anschlag 24 und gleichzeitig die Kontaktfläche 22 gegen den Schließbolzen 7.

Wird nun die Lehne 3 in die Gebrauchsstellung gedrückt, so drückt der Schließbolzen 7 auf die Kontaktfläche 22 des Auswurfschiebers 20, wodurch das Federelement 21 komprimiert wird. Der Auswurfschieber 20 bewegt sich dabei maximal so weit, bis der Schließbolzen 7 an dem Anschlag 24 und damit an dem Boden 10 anliegt. Auch in der Gebrauchsstellung drückt das Federelement 21 den Auswurfschieber 20 mit der Kontaktfläche 22 gegen den Schließbolzen 7.

Wird das Schloss 5 in der Gebrauchsstellung entriegelt, so gibt die Klinke 12 den Schließbolzen 7 frei. Das Federelement 21 dehnt sich aus und beaufschlagt den Auswurfschieber 20. Die Kontaktfläche 22 des Auswurfschiebers 20 drückt dann den Schließbolzen 7 von dem Boden 10 weg, bis die Auswurfstellung der Lehne 3 erreicht ist.

### Bezugszeichenliste

- 1: Sitzteil
- 2: Fahrtrichtung
- 3: Lehne
- 4: Verriegelungsvorrichtung
- 5: Schloss
- 6: Fahrzeugstruktur
- 7: Schließbolzen
- 8: Gehäuse
- 9: Aufnahme
- 10: Boden
- 11: Funktionsfläche
- 12: Klinke
- 13: Klinkenachse
- 14: Hakenmaul
- 16: Fangelementachse
- 17: Fangelement
- 18: Spannelement
- 19: Fangfläche
- 20: Auswurfschieber
- 21: Federelement
- 22: Kontaktfläche
- 24: Anschlag
- 25: Auswerfer
- 30: Klinkenfeder
- 32: Erster Lagerbolzen
- 34: Zweiter Lagerbolzen
- 36: Deckel
- 38: Erste Drehfeder
- 40: Zweite Drehfeder

## Patentansprüche

1. Schloss (5) für einen Fahrzeugsitz,
mit einer um eine Klinkenachse (13) zwischen einer Freigabeposition und einer Verriegelungsposition schwenkbaren Klinke (12) zum Zusammenwirken mit einem Schließbolzen (7) oder einem Schließbügel
und mit einem Auswerfer (25), wobei
der Auswerfer (25) ein in einem Gehäuse (8) des Schlosses (5) angeordnetes Federelement (21) aufweist,
**dadurch gekennzeichnet, dass**
der Auswerfer (25) bei in Freigabeposition befindlicher Klinke (12) mit unter Vorspannung stehendem Federelement (21) an den Schließbolzen (7) oder Schließbügel in Anlage bringbar ist, wodurch der Auswerfer (25) den Schließbolzen(z) oder Schließbügel von der Klinke (12) entfernt hält, und dass der Auswerfer (25) einen von dem Federelement (21) beaufschlagten Auswurfschieber (20) aufweist.

2. Schloss (5) nach Anspruch 1, **dadurch gekennzeichnet, dass** das Gehäuse (8) des Schlosses (5) eine schlitzartige Aufnahme (9) aufweist, deren eines Ende nach außen offen und deren anderes Ende mit einem Boden (10) geschlossen ist.

3. Schloss (5) nach Anspruch 2, **dadurch gekennzeichnet, dass** der Schließbolzen (7) quer zu seiner Längserstreckung in die Aufnahme (9) einführbar und von der Klinke (12) an seiner dem Boden (10) abgewandten Seite umgreifbar ist.

4. Schloss (5) nach einem der vorhergehenden Ansprüche, **dadurch gekennzeichnet, dass** die Klinke (12) von einer Federkraft einer Klinkenfeder (30) beaufschlagt ist, welche ein auf die Klinke (12) in Entriegelungsrichtung wirkendes Drehmoment erzeugt.

5. Schloss (5) nach einem der vorhergehenden Ansprüche, **dadurch gekennzeichnet dass** das Federelement (21) als Druckfeder ausgebildet ist und sich an dem Gehäuse (8) des Schlosses (5) abstützt, wobei das Federelement (21) insbesondere zwischen dem Gehäuse (8) und dem Auswurfschieber (20) eingespannt ist.

6. Schloss (5) nach einem der vorhergehenden Ansprüche, **dadurch gekennzeichnet, dass** das Federelement (21) als zylinderförmige Schraubenfeder ausgestaltet ist.

7. Schloss (5) nach einem der vorhergehenden Ansprüche, **dadurch gekennzeichnet, dass** der Auswurfschieber (20) eine zylindrische Vertiefung besitzt, in welche das Federelement (21) eingepasst ist.

8. Schloss (5) nach einem der vorhergehenden Ansprüche, **dadurch gekennzeichnet, dass** der Auswurfschieber (20) einen Anschlag (24) an zwei Seiten umgreift.

9. Schloss (5) nach Anspruch 8, **dadurch gekennzeichnet, dass** der Anschlag (24) einstückig mit dem Gehäuse (8) ausgebildet ist und den Boden (10) bildet.

10. Schloss (5) nach einem der vorhergehenden Ansprüche, **dadurch gekennzeichnet, dass** der Auswurfschieber (20) zwei Arme umfasst, wobei ein Arm länger ausgebildet ist als der andere Arm, und wobei an einem dem Federelement (21) abgewandten Ende des längeren Arms eine Kontaktfläche (22) vorgesehen ist.

11. Schloss (5) nach Anspruch 10, **dadurch gekennzeichnet, dass** der längere Arm des Auswurfschiebers (20) mit der Kontaktfläche (22) über den Boden (10) hinaus in den Bereich der Aufnahme (9) hinein ragt.

12. Schloss (5) nach einem der vorhergehenden Ansprüche, **dadurch gekennzeichnet, dass** die Klinke (12) des Schlosses (5) mittels einer Entriegelungseinrichtung in eine Freigabeposition bewegbar ist.

13. Fahrzeugsitz, insbesondere Kraftfahrzeugsitz, mit einem Schloss (5) nach einem der vorhergehenden Ansprüche.

14. Fahrzeugsitz nach Anspruch 13,
mit einer Lehne (3), welche aus einer Gebrauchsstellung in eine Nichtgebrauchsstellung relativ zu einer Fahrzeugstruktur (6) schwenkbar und in der Gebrauchsstellung verriegelbar ist, wobei
das Schloss (5) mit der Lehne (3) verbunden ist, und wobei die Klinke (12) in der Gebrauchsstellung der Lehne (3) mit einem Schließbolzen (7) oder einem Schließbügel der Fahrzeugstruktur (6) in Verriegelungseingriff ist,
mit einem Auswerfer (25), durch den die entriegelte Lehne (3) um ein bestimmtes Maß aus der Gebrauchsstellung in eine Auswurfstellung schwenkbar ist, wobei
der Auswerfer (25) ein an der Lehne (3) in einem Gehäuse (8) des Schlosses (5) angeordnetes Federelement (21) aufweist,
**dadurch gekennzeichnet, dass**
der Auswerfer (25) in der Gebrauchsstellung der Lehne (3) mit unter Vorspannung stehendem Federelement (21) an der Fahrzeugstruktur (6) oder dem Schließbolzen (7) oder Schließbügel in Anlage ist.

15. Fahrzeugsitz nach einem der vorhergehenden Ansprüche, **dadurch gekennzeichnet, dass** einer Schwenkbewegung der Lehne (3) aus der Auswurfstellung in die Gebrauchsstellung eine von dem Federelement (21) aufgebrachte Kraft entgegenwirkt, die einer auf die Lehne (3) in Richtung in die Gebrauchsstellung wirkenden Kraft aufgrund des Eigengewichts der Lehne (3) entspricht oder größer ist.

## Claims

1. Latch (5) for a vehicle seat,
having a detent (12) which can be pivoted about a detent axis (13) between a release position and a locking position,
for co-operating with a closure bolt (7) or a curved closure member,
and having an ejector (25),
the ejector (25) having a resilient element (21) which is arranged in a housing (8) of the latch (5),
**characterized in that**
the ejector (25), when the detent (12) is in the release position, with the resilient element (21) which is pretensioned can be brought into abutment with the closure bolt (7) or curved closure member, whereby the ejector (25) keeps the closure bolt (7) or curved closure member separate from the detent (12), and **in that** the ejector (25) has a sliding ejection member (20) which is acted on by the resilient element (21).

2. Latch (5) according to Claim 1, **characterized in that** the housing (8) of the latch (5) has a slot-like receiving member (9), one end of which is open in an outward direction and the other end of which is closed with a base (10).

3. Latch (5) according to Claim 2, **characterized in that** the closure bolt (7) can be introduced, transversely relative to the longitudinal extent thereof, into the receiving member (9) and can be engaged round by the detent (12) at its side facing away from the base (10).

4. Latch (5) according to any one of the preceding claims, **characterized in that** the detent (12) is acted on by a resilient force of a detent spring (30) which produces a torque which acts on the detent (12) in the unlocking direction.

5. Latch (5) according to any one of the preceding claims, **characterized in that** the resilient element (21) is constructed as a pressure spring and is supported on the housing (8) of the latch (5), the resilient element (21) being clamped in particular between the housing (8) and the sliding ejection member (20).

6. Latch (5) according to any one of the preceding claims, **characterized in that** the resilient element (21) is constructed as a cylindrical helical spring.

7. Latch (5) according to any one of the preceding claims, **characterized in that** the sliding ejection member (20) has a cylindrical recess, in which the resilient element (21) is fitted.

8. Latch (5) according to any one of the preceding claims, **characterized in that** the sliding ejection member (20) engages round a stop (24) at two sides.

9. Latch (5) according to Claim 8, **characterized in that** the stop (24) is constructed integrally with the housing (8) and forms the base (10).

10. Latch (5) according to any one of the preceding claims, **characterized in that** the sliding ejection member (20) comprises two arms, one arm being constructed so as to be longer than the other arm, and a contact face (22) being provided at an end of the longer arm facing away from the resilient element (21).

11. Latch (5) according to Claim 10, **characterized in that** the longer arm of the sliding ejection member (20) protrudes with the contact face (22) beyond the base (10) into the region of the receiving member (9).

12. Latch (5) according to any one of the preceding claims, **characterized in that** the detent (12) of the latch (5) can be moved into a release position by means of an unlocking device.

13. Vehicle seat, in particular motor vehicle seat, having a latch (5) according to any one of the preceding claims.

14. Vehicle seat according to Claim 13,
having a backrest (3) which can be pivoted relative to a vehicle structure (6) from a position for use into a non-use position and which can be locked in the position for use,
the latch (5) being connected to the backrest (3), and the detent (12), when the backrest (3) is in the position for use, being in locking engagement with a closure bolt (7) or a curved closure member of the vehicle structure (6),
having an ejector (25) by means of which the unlocked backrest (3) can be pivoted by a specific extent from the position for use into an ejection position,
the ejector (25) having a resilient element (21) which is arranged on the backrest (3) in a housing (8) of the latch (5),
**characterized in that**,
when the backrest (3) is in the position for use with a pretensioned resilient element (21), the ejector (25) is in abutment with the vehicle structure (6) or the closure bolt (7) or curved closure member.

15. Vehicle seat according to any one of the preceding claims, **characterized in that** a pivot movement of the backrest (3) from the ejection position into the position for use is counteracted by a force which is applied by the resilient element (21) and which corresponds to or is greater than a force acting on the backrest (3) in the direction toward the position for use owing to the inherent weight of the backrest (3).

## Revendications

1. Verrou (5) pour un siège de véhicule,
comprenant un cliquet (12) pouvant pivoter autour d'un axe de cliquet (13) entre une position de libération et une position de verrouillage en vue de la coopération avec un boulon de fermeture (7) ou un étrier de fermeture,
et comprenant un éjecteur (25),
l'éjecteur (25) comprenant un élément ressort (21) disposé dans un boîtier (8) du verrou (5), **caractérisé en ce que**,
lorsque le cliquet (12) se trouve dans la position de libération, l'éjecteur (25) peut être amené en appui contre le boulon de fermeture (7) ou l'étrier de fermeture à l'aide de l'élément ressort (21) sous précontrainte, de sorte que l'éjecteur (25) maintienne le boulon de fermeture (7) ou l'étrier de fermeture éloigné du cliquet (12), et
**en ce que** l'éjecteur (25) comprend un coulisseau d'éjection (20) sollicité par l'élément ressort (21).

2. Verrou (5) selon la revendication 1, **caractérisé en ce que** le boîtier (8) du verrou (5) comprend un logement (9) de type fente dont l'une des extrémités est ouverte vers l'extérieur et dont l'autre extrémité est fermée par un fond (10).

3. Verrou (5) selon la revendication 2, **caractérisé en ce que** le boulon de fermeture (7) peut être inséré, transversalement à son étendue longitudinale, dans le logement (9) et le cliquet (12) peut venir en prise autour du boulon de fermeture au niveau de son côté opposé au fond (10).

4. Verrou (5) selon 1"une quelconque des revendications précédentes, **caractérisé en ce que** le cliquet (12) est sollicité par une force de ressort d'un ressort de cliquet (30) qui produit un couple agissant dans le sens de déverrouillage sur le cliquet (12).

5. Verrou (5) selon 1"une quelconque des revendications précédentes, **caractérisé en ce que** 1"élément ressort (21) est réalisé sous forme de ressort de compression et s'appuie contre le boîtier (8) du verrou (5), l'élément ressort (21) étant en particulier serré entre le boîtier (8) et le coulisseau d'éjection (20).

6. Verrou (5) selon l'une quelconque des revendications précédentes, **caractérisé en ce que** l'élément ressort (21) est configuré sous forme de ressort hélicoïdal cylindrique.

7. Verrou (5) selon l'une quelconque des revendications précédentes, **caractérisé en ce que** le coulisseau d'éjection (20) possède un évidement cylindrique dans lequel est ajusté l'élément ressort (21).

8. Verrou (5) selon l'une quelconque des revendications précédentes, **caractérisé en ce que** le coulisseau d'éjection (20) vient en prise autour d'une butée (24) au niveau de deux côtés.

9. Verrou (5) selon la revendication 8, **caractérisé en ce que** la butée (24) est réalisée d'un seul tenant avec le boîtier (8) et forme le fond (10).

10. Verrou (5) selon l'une quelconque des revendications précédentes, **caractérisé en ce que** le coulisseau d'éjection (20) comporte deux bras, un bras étant réalisé de manière à être plus long que l'autre bras, et une surface de contact (22) étant réalisée à une extrémité du bras plus long opposée à l'élément ressort (21).

11. Verrou (5) selon la revendication 10, **caractérisé en ce que** le bras plus long du coulisseau d'éjection (20) fait saillie par la surface de contact (22) au-delà du fond (10) dans la région du logement (9).

12. Verrou (5) selon l'une quelconque des revendications précédentes, **caractérisé en ce que** le cliquet (12) du verrou (5) peut être déplacé jusqu'à une position de libération au moyen d'un dispositif de déverrouillage.

13. Siège de véhicule, en particulier siège de véhicule automobile, comprenant un verrou (5) selon l'une quelconque des revendications précédentes.

14. Siège de véhicule selon la revendication 13, comprenant un dossier (3) qui peut être pivoté par rapport à une structure de véhicule (6) à partir d'une position d'utilisation jusqu'à une position de non utilisation et qui peut être verrouillé dans la position d'utilisation,
le verrou (5) étant relié au dossier (3) et, lorsque le dossier (3) est dans la position d'utilisation, le cliquet (12) étant en engagement de verrouillage avec un boulon de fermeture (7) ou un étrier de fermeture de la structure de véhicule (6),
comprenant un éjecteur (25) au moyen duquel le dossier déverrouillé (3) peut être pivoté dans une mesure déterminée à partir de la position d'utilisation jusqu'à une position d'éjection, l'éjecteur (25) comprenant un élément ressort (21) disposé sur le dossier (3) dans un boîtier (8) du verrou (5),
**caractérisé en ce que**,
dans la position d'utilisation du dossier (3), l'éjecteur (25) est en appui contre la structure de véhicule (6) ou le boulon de fermeture (7) ou l'étrier de fermeture à l'aide de l'élément ressort (21) sous précontrainte.

15. Siège de véhicule selon l'une quelconque des revendications précédentes, **caractérisé en ce qu'**une force appliquée par l'élément ressort (21) s'oppose à un mouvement de pivotement du dossier (3) à partir de la position d'éjection jusqu'à la position d'utilisation, laquelle force correspond ou est supérieure à une force agissant sur le dossier (3) en direction de la position d'utilisation en raison du poids propre du dossier (3).
